# FASCICULE DE BREVET EUROPEEN

(11) **EP 0 636 906 B1**
(45) Date de publication et mention de la délivrance du brevet: **18.03.1998**
(21) Numéro de dépôt: 94401713.6
(22) Date de dépôt: 26.07.1994
(51) Int. Cl.: G01V 3/26

(54) **Installation et procédé pour la mesure de l'aimantation rémanente de formation géologique**
Anlage und Verfahren zum Messen des remanenten Magnetismus einer geologischen Formation
Installation and method for measuring the remanent magnetization of a geologic formation

(30) Priorité: 30.07.1993 FR 9309428
(43) Date de publication de la demande: 01.02.1995
(73) Titulaire: COMMISSARIAT A L'ENERGIE ATOMIQUE, 75015 Paris (FR)
(72) Inventeur: Pocachard, Jacques, F-38340 Voreppe (FR); Barthes, Véronique, F-38330 Saint Ismier (FR)
(74) Mandataire: Ilgart, Jean-Christophe

(56) Documents cités:
- EP-A- 0 348 049
- EP-A- 0 422 985
- GB-A- 2 158 950
- US-A- 3 965 413

## Description

L'invention a trait à une installation et à un procédé destinés à calculer l'aimantation rémanente d'une formation géologique.

L'aimantation rémanente est une caractéristique des formations géologiques et se traduit par un champ magnétique dont la direction dépend de la position géographique du pôle magnétique au moment ou la formation géologique concernée se forme. Comme cette position a beaucoup varié au cours des âges, la détection de la direction de l'aimantation rémanente permet de dater les formations géologiques. Ce procédé est très intéressant pour les formations géologiques souterraines atteintes par des forages et pour lesquelles il n'est pas facile de recourir à d'autres méthodes, ce qui explique que des mesures d'aimantation rémanente soient appréciées pour la prospection pétrolière, qu'elles facilitent en fournissant l'âge des terrains traversés.

Des capteurs magnétiques et électromagnétiques sont utilisés pour mesurer le champ magnétique associé à l'aimantation rémanente. Trois champs magnétiques interviennent cependant dans les mesures : outre le champ rémanent, il s'agit du champ associé à la susceptibilité magnétique de la roche, qui est induit dans la roche en fonction de la susceptibilité magnétique locale et du champ magnétique terrestre, dû aux influences magnétiques lointaines et qui est de beaucoup prépondérant.

Les sondes de mesure sont donc composées de plusieurs capteurs dont l'agencement permet de distinguer les effets de ces trois champs magnétiques. Plusieurs systèmes, associés à des procédés différents, ont été proposés. Dans celui qui est apparemment le plus proche de l'invention (illustré dans le brevet français enregistré sous le numéro 89 13199), on utilise un magnétomètre scalaire qui mesure la somme du champ magnétique terrestre et des projections selon l'axe de ce champ des champs magnétiques rémanent et de susceptibilité. Le champ magnétique terrestre est mesuré séparément par un autre magnétomètre scalaire, qui peut être situé en surface ou à un autre endroit relativement peu éloigné de la sonde (puisque les variations temporelles du champ magnétique terrestre ne varient guère avec la distance), et un capteur de susceptibilité est utilisé pour mesurer séparément le champ magnétique de susceptibilité.

Les soustractions du champ magnétique terrestre et de la projection du champ magnétique de susceptibilité du résultat fourni par le premier magnétomètre scalaire permettent d'obtenir la projection du champ rémanent suivant l'axe du champ magnétique terrestre. Les basculements de la position du pôle magnétique entre le Nord et le Sud géographique apparaissent clairement quand on fait un relevé diagraphique de l'aimantation rémanente le long du forage, car ils correspondent à des annulations et des changements de sens de la projection calculée de l'aimantation rémanente. Comme les époques de ces basculements sont connues, l'âge des terrains traversés peut être déduit. Mais on se heurte à de graves difficultés pratiques, car l'annulation des projections peut également provenir d'un affaiblissement local de l'aimantation rémanente purement fortuit car lié à la nature de la roche, et il est d'autant plus difficile de distinguer entre ces deux causes que la mesure de l'aimantation rémanente est soumise à des incertitudes importantes car l'intensité du champ magnétique terrestre est de loin prépondérante (50 000 nanoteslas contre quelques dizaines de nanoteslas ou moins).

Il est évident qu'un dépouillement des mesures où le nombre de basculements du pôle magnétique serait mal évalué n'aurait guère ou pas de valeur pour la datation des terrains. Or on constate que le champ rémanent mesuré est presque indiscernable ou illisible sur 20% de la profondeur du puits.

Le but de l'invention est de compléter le dispositif antérieur en détectant par des mesures et des calculs une autre composante du champ rémanent, qui peut par exemple être perpendiculaire à l'axe du champ magnétique terrestre. On peut alors discerner immédiatement si l'annulation de la projection suivant l'axe du champ magnétique est due à un basculement du pôle magnétique ou à un affaiblissement de l'aimantation rémanente.

Sous sa forme la plus générale, l'invention concerne une installation de détection de composante du champ rémanent, associée à une aimantation rémanente, d'une formation géométrique possédant également une susceptibilité magnétique associée à un champ magnétique de susceptibilité, la formation géologique étant plongée dans un champ magnétique terrestre, les champs magnétiques terrestre, rémanent et de susceptibilité formant un champ magnétique total quand ils sont ajoutés dans la direction du champ magnétique terrestre, la composante détectée du champ rémanent étant sécante à la direction du champ magnétique terrestre, comprenant un magnétomètre scalaire mesurant le champ magnétique total, un moyen de mesure du champ magnétique terrestre en intensité ou en direction, un moyen de mesure du champ magnétique de susceptibilité en intensité et en direction, et des moyens de combinaison numérique des mesures ; installation comprenant encore un magnétomètre mesurant une somme algébrique des champs magnétiques terrestre, rémanent et de susceptibilité projetés selon une direction de mesure différant de la direction du champ magnétique terrestre.

Le second magnétomètre, qui peut être monoaxial ou vectoriel, peut être composé d'un détecteur vectoriel et d'une cellule de positionnement ou de mesure du détecteur vectoriel en orientation, ou de deux détecteurs vectoriels accouplés pour effectuer des mesures différentielles.

L'invention concerne également un procédé de détection d'une composante du champ rémanent, associée à une aimantation rémanente, d'une formation géologique possédant également une susceptibilité magnétique associée à un champ magnétique de susceptibilité, la formation géologique étant plongée dans un champ magnétique terrestre, les champs magnétiques terrestre, rémanent et de susceptibilité formant un champ magnétique total quand ils sont ajoutés dans la direction du champ magnétique terrestre, la composante détectée du champ rémanent étant sécante à la direction du champ magnétique terrestre, consistant à mesurer le champ magnétique total, à obtenir en direction et en intensité le champ magnétique terrestre et le champ magnétique de susceptibilité, caractérisé en ce qu'il consiste à mesurer une somme algébrique des champs magnétiques terrestre, rémanent et de susceptibilité projetés selon une direction de mesure différant de la direction du champ magnétique terrestre, à obtenir l'angle entre la direction de mesure et la direction du champ magnétique total, à calculer les composantes du champ magnétique terrestre et du champ magnétique de susceptibilité selon la direction de mesure, puis la composante du champ magnétique rémanent selon la direction de mesure.

On peut ensuite favorablement calculer la composante du champ magnétique rémanent selon la direction de mesure ou selon la direction du champ magnétique terrestre pour calculer enfin une composante vectorielle du champ rémanent perpendiculairement à la direction du champ magnétique terrestre.

On va maintenant décrire l'invention plus en détail à l'aide des figures suivantes, annexées à titre illustratif et non limitatif :
- la figure 1 représente des champs magnétiques mis en jeu et les notations utilisées dans cette description,
- la figure 2 est une illustration schématique du dispositif de mesure,
- les figures 2A et 2B illustrent plus en détail la sonde de mesure,
- et la figure 3 est un organigramme résumant le procédé.

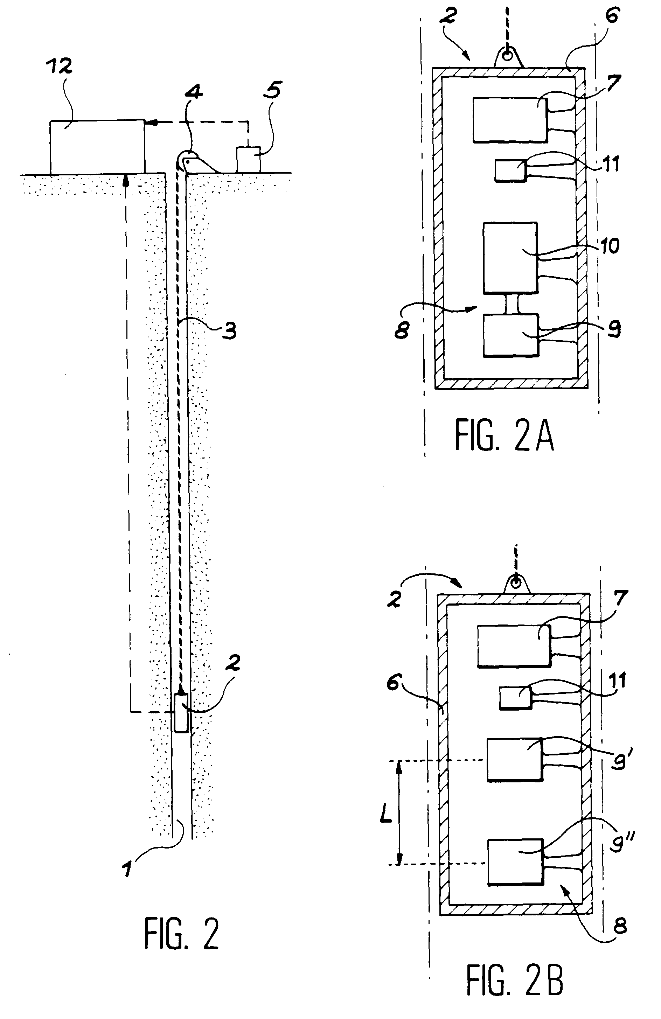

Le dispositif conforme à l'invention est notamment utilisé (figure 2) pour des mesures dans un trou de forage 1 à une profondeur de quelques centaines de mètres ou de quelques kilomètres. Son élément essentiel est une sonde 2 suspendue à un câble 3 qui dépend d'une installation de dévidage 4 située au sol. La sonde 2 est reliée, de même qu'un magnétomètre de surface 5, à une installation de commande et de calcul 12 par des fils électriques non représentés.

Le magnétomètre de surface 5 est utilisé pour mesurer le champ magnétique terrestre en surface. Il peut être situé près de l'ouverture du forage 1 ou à une certaine distance qui peut atteindre cent kilomètres en pratique.

La sonde 2 proprement dite est constituée d'une coque 6 attachée au câble 3 et qui contient, selon la réalisation de la figure 2A, un magnétomètre scalaire 7, un magnétomètre monoaxial 8 et un capteur de susceptibilité magnétique 11. Le magnétomètre scalaire 7 et le capteur de susceptibilité 11 sont reliés rigidement à la coque 6, mais le magnétomètre monoaxial 8 comprend un détecteur vectoriel 9 de champ magnétique dont l'orientation doit être soit maintenue constante quelles que soient les variations de position angulaire de la sonde 2, soit - et c'est ce qui utilisé dans les conditions concrètes de mesure dans le trou de forage 1 - mesurée par une cellule d'orientation dans les mêmes conditions. Cette cellule d'orientation 10 est incorporée à la sonde 2.

On retrouve le magnétomètre scalaire 7 et le capteur de susceptibilité 11 dans la réalisation quelque peu différente de la figure 2B, mais le magnétomètre monoaxial 8' est constitué par deux détecteurs vectoriels 9' et 9" rigidement reliés à la coque 6 et qui ont été placés avec des directions de mesure identiques et un espacement L connu avec précision. Ils permettent d'effectuer des mesures de gradient.

Ces différents moyens de mesure ou de détection ne sont représentés que schématiquement car ils ne font pas partie de l'invention, étant déjà bien connus et illustrés dans de nombreuses publications. Citons en particulier les brevets américains n°2 524 360, 2 664 542, 2 716 730, 3 317 821, 3 369 174, 3 402 348, 3 965 412, 3 965 413 et 4 071 815 ainsi que le brevet français 2 564 601 qui décrivent tous des sondes de mesure magnétique dans des trous de forage et où on cherche souvent à mesurer l'aimantation rémanente par différentes méthodes. Les magnétomètres scalaires peuvent être à résonance magnétique nucléaire ou à pompage optique, les magnétomètres ou détecteurs vectoriels des discriminateurs de flux ou des détecteurs à résonance (par exemple RPE) ou à pompage optique.

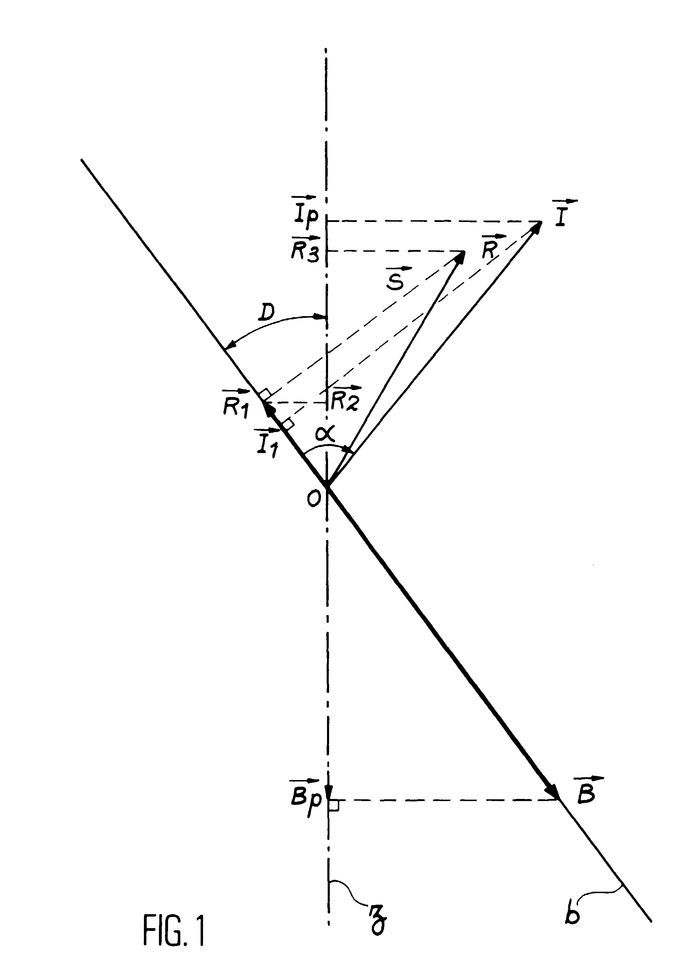

On se reporte à la figure 1. Le magnétomètre scalaire 7 mesure un champ magnétique qui peut être exprimé par une somme algébrique du champ magnétique B (orienté suivant un axe b oblique), de la projection I1 du champ magnétique de susceptibilité I sur cet axe b et de la projection R1 du champ magnétique rémanent R sur ce même axe b. Le champ magnétique de susceptibilité I fait un angle α avec l'axe b, et le champ magnétique rémanent R est égal à la somme vectorielle de ses composantes R1 et S, cette dernière étant perpendiculaire à l'axe b. Le magnétomètre monoaxial 8 mesure directement la somme algébrique des projections des trois champs magnétiques B, I et R suivant l'axe de mesure z, qui peut en pratique être choisi vertical comme le trou de forage 1 ou dont l'orientation est mesurée par la cellule 10 ; ces trois projections sont notées Bp, Ip et R3.

Le magnétomètre monoaxial 8' effectue une mesure différentielle et fonctionne donc comme un gradientmètre vectoriel qui fournit les variations de Ip et R3 selon la direction de mesure. Il suffit d'intégrer son signal pour obtenir à nouveau la somme algébrique (Bp+Ip+R3).

L'étape suivante du procédé consiste à calculer l'angle D que font les axes b et z. Cet angle D est égal à arc cos [(Bp + Ip + R3) / (B + I1 + R1)] et peut donc être calculé immédiatement après les mesures ou lu sur des cartes géomagnétiques qui fournissent également la direction de l'axe b.

Le magnétomètre scalaire de surface 5 permet de mesurer séparément l'intensité du champ magnétique terrestre B, dont la direction est par ailleurs connue, et le capteur de susceptibilité 11 mesure l'intensité et la direction du champ magnétique de susceptibilité I, ce qui fournit l'angle α une fois que la direction de l'axe b est connue. On en déduit la projection I1, puis la projection R1 par la soustraction (B+R1+I1)-B-I1.

La connaissance de l'angle D et de la direction du champ magnétique de susceptibilité I permet de calculer les projections Ip et Bp sur l'axe z. On en déduit la projection R3 par la soustraction (Bp+Ip+R3)-Bp-Ip, puis enfin la composante S recherchée par S=(R3-R1cosD)/sinD.

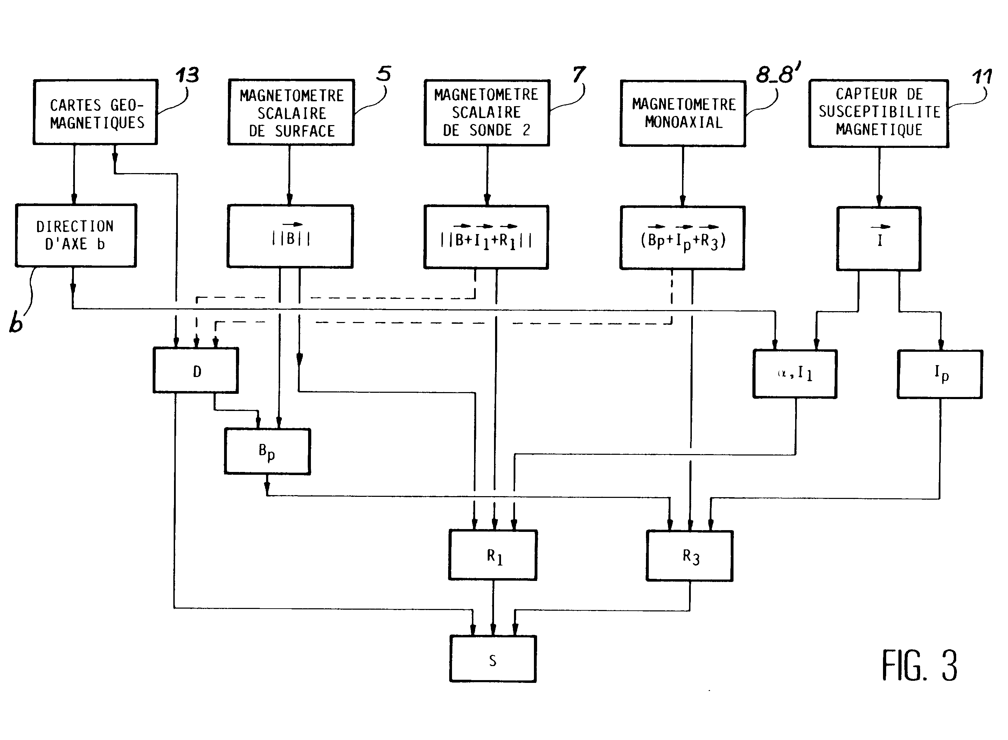

L'organigramme de la figure 3 résume le déroulement de ces calculs, qui sont accomplis dans l'installation de commande et de calcul 12 à laquelle on fournit aussi les données géomagnétiques lues sur les cartes (référencées par 13). Quand la courbe d'évolution de la composante S avec la profondeur est connue, elle est mise côte à côte avec la courbe d'évolution de la composante R1 pour qu'on puisse compter sans erreur les traces des basculements du pôle magnétique et déduire avec une précision bien meilleure l'âge des terrains en fonction de la profondeur.

Les mesures sont effectuées en pratique à des intervalles de cinq centimètres.

Les différents moyens de mesure peuvent être placés dans des sondes séparées qui sont descendues successivement dans le trou de forage 1.

## Revendications

1. Installation de détection d'une composante (S) du champ rémanent (R), associée à une aimantation rémanente, d'une formation géologique possédant également une susceptibilité magnétique associée à un champ magnétique de susceptibilité (I), la formation géologique étant plongée dans un champ magnétique terrestre (B), les champs magnétiques terrestre, rémanent et de susceptibilité formant un champ magnétique total quand ils sont ajoutés dans la direction du champ magnétique terrestre, la composante (S) détectée du champ rémanent (R) étant sécante à la direction (b) du champ magnétique terrestre, comprenant un magnétomètre scalaire (7) mesurant le champ magnétique total, un moyen de mesure (5) du champ magnétique terrestre (B), un moyen de mesure du champ magnétique de susceptibilité (I) en intensité et en direction, et des moyens (12) de combinaison numérique des mesures, caractérisée en ce qu'elle comprend un second magnétomètre (8, 8') mesurant une somme algébrique des champs magnétiques terrestre, rémanent et de susceptibilité projetés selon une direction de mesure, différant de la direction du champ magnétique terrestre.

2. Installation de détection suivant la revendication 1, caractérisée en ce que le second magnétomètre (8) est composé d'un détecteur vectoriel (9) et d'une cellule de maintien d'orientation (10) du détecteur vectoriel.

3. Installation de détection suivant la revendication 1, caractérisée en ce que le second magnétomètre (8) est composé d'un détecteur vectoriel (9) et d'une cellule de mesure d'orientation du détecteur vectoriel.

4. Installation de détection suivant la revendication 1, caractérisée en ce que le second magnétomètre est composé de deux détecteurs vectoriels (9, 9') accouplés pour effectuer des mesures différentielles.

5. Procédé de détection du champ rémanent (R), associée à une orientation rémanente, d'une formation géologique possédant également une susceptibilité magnétique associée à un champ magnétique de susceptibilité (I), la formation géologique étant plongée dans un champ magnétique terrestre (B), les champs magnétiques terrestre, rémanent et de susceptibilité formant un champ magnétique total quand ils sont ajoutés dans la direction du champ magnétique terrestre, une composante (S) détectée du champ rémanent (R) étant sécante à la direction (b) du champ magnétique terrestre, consistant à mesurer le champ magnétique total, à obtenir en direction et en intensité le champ magnétique terrestre (B) et le champ magnétique de susceptibilité (I), caractérisé en ce qu'il consiste à mesurer une somme algébrique des champs magnétiques terrestre, rémanent et de susceptibilité projetés selon une direction de mesure différant de la direction du champ magnétique terrestre, à obtenir l'angle entre la direction de mesure et la direction du champ magnétique total, à calculer les composantes (Bp, Ip) du champ magnétique terrestre et du champ magnétique de susceptibilité selon la direction de mesure, puis la composante (R3) du champ magnétique rémanent (R) selon la direction de mesure.

6. Procédé de détection suivant la revendication 5, caractérisé en ce qu'il consiste à calculer également la composante (R1) du champ magnétique rémanent (R) selon la direction du champ magnétique terrestre.

7. Procédé de détection suivant la revendication 6, caractérisé en ce que les deux composantes (R1 et R3) du champ magnétique rémanent suivant les directions de mesure et du champ magnétique terrestre sont combinées en fonction de l'angle (D) entre lesdites deux composantes pour calculer la composante (S) du champ magnétique rémanent perpendiculairement à la direction du champ magnétique terrestre.

8. Procédé de détection suivant la revendication 5, caractérisé en ce que la direction de mesure est un axe de trou (1) foré dans la formation géologique.

## Patentansprüche

1. Meßanlage bzw. Detektionsanlage einer Komponente (S) des Remanenzfeldes (R), verbunden mit einem remanenten Magnetismus, einer geologischen Formation, die auch eine mit einem Suszeptibilitätsmagnetfeld (I) verbundene magnetische Suszeptibiltät besitzt, wobei die geologische Formation in ein Erdmagnetfeld (B) getaucht ist, die Erd-, Remanenz- und Suszeptibilitätsmagnetfelder ein Gesamtmagnetfeld bilden, wenn sie in der Richtung des Erdmagnetfeldes zusammengefügt bzw. überlagert sind, die detektierte Komponente (S) des Remanenzfeldes (R) die Richtung (b) des Erdmagnetfeldes schneidet, umfassend ein das Gesamtmagnetfeld messendes Skalarmagnetometer (7), eine Meßeinrichtung (5) des Erdmagnetfeldes (B), eine Meßeinrichtung der Stärke und Richtung des Suszeptibilitätsmaqnetfeldes (I) und Einrichtungen (12) zur digitalen Kombination bzw. Verknüpfung der Messungen,
**dadurch gekennzeichnet,**
daß sie ein zweites Magnetometer (8, 8') umfaßt, das eine algebraische Summe der Erd-, Remanenz- und Suszeptibilitätsmagnetfelder, projiziert entsprechend einer von der Richtung des Erdmagnetfeldes abweichenden Meßrichtung, mißt.

2. Detektionsanlage nach Anspruch 1, dadurch gekennzeichnet, daß das zweite Magnetometer (8) gebildet wird durch einen Vektordetektor (9) und eine Zelle (10) zur Aufrechterhaltung der Ausrichtung des Vektordetektors.

3. Detektionsanlage nach Anspruch 1, dadurch gekennzeichnet, daß das zweite Magnetometer (8) gebildet wird durch einen Vektordetektor (9) und eine Zelle zur Messung der Ausrichtung des Vektordetektors.

4. Detektionsanlage nach Anspruch 1, dadurch gekennzeichnet, daß das zweite Magnetometer gebildet wird durch zwei zur Durchführung von Differentialmessungen gekoppelte Vektordetektoren (9, 9').

5. Detektionsverfahren des Remanenzfeldes (R), verbunden mit einer remanenten Orientierung bzw. Ausrichtung, einer geologischen Formation, die auch eine mit einem Suszeptibilitätsmagnetfeld (I) verbundene magnetische Suszeptibiltät besitzt, wobei die geologische Formation in ein Erdmagnetfeld (B) getaucht ist, die Erd-, Remanenz- und Suszeptibilitätsmagnetfelder ein Gesamtmagnetfeld bilden, wenn sie in der Richtung des Erdmagnetfeldes zusammengefügt bzw. überlagert sind, eine detektierte Komponente (S) des Remanenzfeldes (R) die Richtung (b) des Erdmagnetfeldes schneidet, darin bestehend, das Gesamtmagnetfeld zu messen, Richtung und Stärke des Erdmagnetfeldes (B) und des Suszeptibilitätsmaqnetfeldes (I) zu erhalten, dadurch gekennzeichnet, daß es darin besteht, eine algebraische Summe der Erd-, Remanenz- und Suszeptibilitätsmagnetfelder, projiziert entsprechend einer von der Richtung des Erdmagnetfeldes abweichenden Meßrichtung, zu messen, den Winkel zwischen der Meßrichtung und der Richtung des Gesamtmagnetfeldes zu erhalten, die Komponenten (Bp, Ip) des Erdmagnetfeldes und des Suszeptibilitätsmaqnetfeldes in der Meßrichtung zu berechnen, dann die Komponente (R3) des Remanenzmagnetfeldes (R) in der Meßrichtung zu berechnen.

6. Detektionsverfahren nach Anspruch 5, dadurch gekennzeichnet, daß es darin besteht, ebenfalls die Komponente (R1) des Remanenzmagnetfeldes (R) in der Richtung des Erdmagnetfeldes zu berechnen.

7. Detektionsverfahren nach Anspruch 6, dadurch gekennzeichnet, daß die beiden Komponenten (R1 und R3) des Remanenzmagnetfeldes entsprechend den Meßrichtungen und des Erdmagnetfeldes vereinigt bzw. verbunden sind in Abhängigkeit von dem Winkel (D) zwischen besagten beiden Komponenten, um die zur Richtung des Erdmagnetfeldes senkrechte Komponente (S) des Remanenzmagnetfeldes zu berechnen.

8. Detektionsverfahren nach Anspruch 5, dadurch gekennzeichnet, daß die Meßrichtung die Achse eines in eine geologische Formation gebohrten Bohrlochs (1) ist.

## Claims

1. Installation for the detection of a component (S) of the remanent field (R), associated with a remanent magnetization, of a geological formation also having a magnetic susceptibility associated with a magnetic susceptibility field (I), the geological formation being submerged in a geomagnetic field (B), the geomagnetic, remanent and susceptibility fields forming a total magnetic field when they are added in the direction of the geomagnetic field, the detected component (S) of the remanent field (R) being secant to the direction (B) of the geomagnetic field, incorporating a scalar magnetometer (7) measuring the total magnetic field, a means (5) for measuring the geomagnetic field (B), a means for measuring the magnetic susceptibility field (I) in intensity and direction, and means (12) for the digital combination of the measurements, characterized in that it comprises a second magnetometer (8, 8') measuring an algebraic sum of the geomagnetic, remanent and susceptibility fields projected in a measurement direction differing from the direction of the geomagnetic field.

2. Detection installation according to claim 1, characterized in that the second magnetometer (8) is constituted by a vector detector (9) and a cell (10) for maintaining the orientation of the vector detector.

3. Detection installation according to claim 1, characterized in that the second magnetometer (8) is formed by a vector detector (9) and a cell for measuring the orientation of the vector detector.

4. Detector installation according to claim 1, characterized in that the second magnetometer is formed from two coupled vector detectors (9, 9') for performing differential measurements.

5. Process for the detection of the remanent field (R), associated with a remanent orientation, of a geological formation also having a magnetic susceptibility associated with a magnetic susceptibility field (I), the geological formation being submerged in a geomagnetic field (B), the geomagnetic, remanent and susceptibility fields forming a total magnetic field when added in the direction of the geomagnetic field, a detected component (S) of the remanent field (R) being secant to the direction (b) of the geomagnetic field, consisting of measuring the total magnetic field, obtaining in direction and intensity the geomagnetic field (B) and the magnetic susceptibility field (I), characterized in that it consists of measuring an algebraic sum of the geomagnetic, remanent and susceptibility fields projected in a measurement direction differing from the direction of the geomagnetic field, obtaining the angle between the measurement direction and the total magnetic field direction, calculating the components (Bp, Ip) of the geomagnetic field and the magnetic susceptibility field along the measurement direction and then the component (R3) of the remanent magnetic field (R) along the measurement direction.

6. Detection process according to claim 5, characterized in that it also consists of calculating the component (R1) of the remanent magnetic field (R) in the geomagnetic field direction.

7. Detection process according to claim 6, characterized in that the two components (R1 and R3) of the remanent magnetic field in the measurement direction and of the geomagnetic field are combined as a function of the angle (D) between said two components for calculating the component (S) of the remanent magnetic field perpendicular to the direction of the geomagnetic field.

8. Detection process according to claim 5, characterized in that the measurement direction is an axis of the hole (1) drilled in the geological formation.
